# EUROPEAN PATENT SPECIFICATION

(11) **EP 4 221 129 B1**
(45) Date of publication and mention of the grant of the patent: **25.02.2026**
(21) Application number: 21884725.9
(22) Date of filing: 06.09.2021
(51) Int. Cl.: H04L 43/50, H04L 43/0829, H04L 43/0852, H04L 43/087

(54) **PERFORMANCE MEASUREMENT METHOD, DEVICE, AND SYSTEM**
LEISTUNGSMESSVERFAHREN, -VORRICHTUNG UND -SYSTEM
PROCÉDÉ DE MESURE DE PERFORMANCE, DISPOSITIF ET SYSTÈME

(30) Priority: 30.10.2020 CN 202011192868; 19.03.2021 CN 202110296374; 31.03.2021 CN 202110352736
(43) Date of publication of application: 02.08.2023
(73) Proprietor: Huawei Technologies Co., Ltd., Shenzhen, Guangdong 518129 (CN)
(72) Inventor: WANG, Yali, Shenzhen, Guangdong 518129 (CN); ZHOU, Tianran, Shenzhen, Guangdong 518129 (CN); XIE, Jingrong, Shenzhen, Guangdong 518129 (CN)
(74) Representative: Thun, Clemens
(86) International application number: PCT/CN2021/116584
(87) International publication number: WO 2022/088994

(56) References cited:
- EP-A1- 3 242 441
- EP-A2- 3 731 475
- CN-A- 105 812 197
- CN-A- 105 871 565
- CN-A- 109 428 825
- CN-A- 109 921 987
- US-A1- 2016 254 987

## Description

### TECHNICAL FIELD

The present invention relates to the field of communication technologies, and in particular, to a performance measurement method and apparatus, and a system.

### BACKGROUND

In a bit index explicit replication (Bit Index Explicit Replication, BIER) domain, a bit forwarding ingress router (bit forwarding ingress router, BFIR) may send a BIER data packet based on a configured bit index routing table (bit index routing table, BIRT) entry or bit index forwarding table (bit index forwarding table, BIFT) entry. The BIER data packet includes a multicast data packet and a BIER header encapsulated in the multicast data packet. The BIER header includes a bit string (bit string). A bit set to 1 in the bit string corresponds to one or more bit forwarding egress routers (bit forwarding egress routers, BFERs) that need to receive the BIER data packet. Currently, performance such as a delay, a packet loss, and a jitter in the BIER domain is measured by using an in-situ operations, administration and maintenance (In-situ Operations, Administration, and Maintenance, IOAM) technology. For example, an IOAM instruction header and an IOAM option and data space (IOAM option and data space) field are encapsulated after the BIER header of the BIER data packet. The foregoing performance measurement method by using the IOAM technology needs to be implemented through forwarding of the BIER data packet. When performance measurement is performed by using the BIER data packet, performance measurement cannot be performed on paths to all BFERs that serve as leaf nodes.

The document EP 3 242 441 A1 shows a bit-forwarding ingress router, a bit-forwarding router, and an operation, administration and maintenance detection method for operating bit-forwarding ingress routers. Especially, a performance measurement of such routers is shown.

### SUMMARY

The present invention is defined by the independent claims. Further advantageous developments are shown by the dependent claims.

Embodiments of this application provide a performance measurement method and apparatus to flexibly measure performance of a path in a BIER domain.

### BRIEF DESCRIPTION OF DRAWINGS

FIG. 1 is a schematic diagram of a network scenario according to an embodiment of this application;
FIG. 2 is a schematic flowchart of a performance measurement method according to Embodiment 1 of this application;
FIG. 3a is a schematic diagram of a packet format of a first packet according to Embodiment 1 of this application;
FIG. 3b is a schematic diagram of another packet format of a first packet according to Embodiment 1 of this application;
FIG. 3c is a schematic diagram of packet formats of a BIER header and an IOAM option according to Embodiment 1 of this application;
FIG. 3d is a schematic diagram of a packet format of a BIER header according to Embodiment 1 of this application;
FIG. 3e is a schematic diagram of a packet format of a STAMP test packet according to Embodiment 1 of this application;
FIG. 3f is a schematic diagram of another packet format of a STAMP test packet according to Embodiment 1 of this application;
FIG. 3g is a schematic diagram of a packet format of a second packet according to Embodiment 1 of this application;
FIG. 3h is a schematic diagram of a packet format of a STAMP test packet according to Embodiment 1 of this application;
FIG. 3i is a schematic diagram of another packet format of a second packet according to Embodiment 1 of this application;
FIG. 3j is a schematic diagram of another packet format of a STAMP test packet according to Embodiment 1 of this application;
FIG. 4 is a schematic flowchart of a performance measurement method according to Embodiment 2 of this application;
FIG. 5a is a schematic diagram of a format of a first packet according to Embodiment 2 of this application;
FIG. 5b is a schematic diagram of another format of a first packet according to Embodiment 2 of this application;
FIG. 5c is a schematic diagram of packet formats of a BIER header and a STAMP test packet according to Embodiment 2 of this application;
FIG. 5d is a schematic diagram of a packet format of an IOAM option according to Embodiment 2 of this application;
FIG. 6 is a schematic diagram of a structure of a performance measurement apparatus disposed in a BFIR according to an embodiment of this application;
FIG. 7 is a schematic diagram of a structure of a performance measurement apparatus disposed in a BFER according to an embodiment of this application;
FIG. 8 is a schematic diagram of a structure of another performance measurement apparatus disposed in a BFIR according to an embodiment of this application; and
FIG. 9 is a schematic diagram of a structure of another performance measurement apparatus disposed in a BFER according to an embodiment of this application.

### DESCRIPTION OF EMBODIMENTS

To make the objectives, technical solutions, and advantages of embodiments of the present invention clearer, the following clearly and completely describes the technical solutions of embodiments of the present invention with reference to the accompanying drawings in embodiments of the present invention.

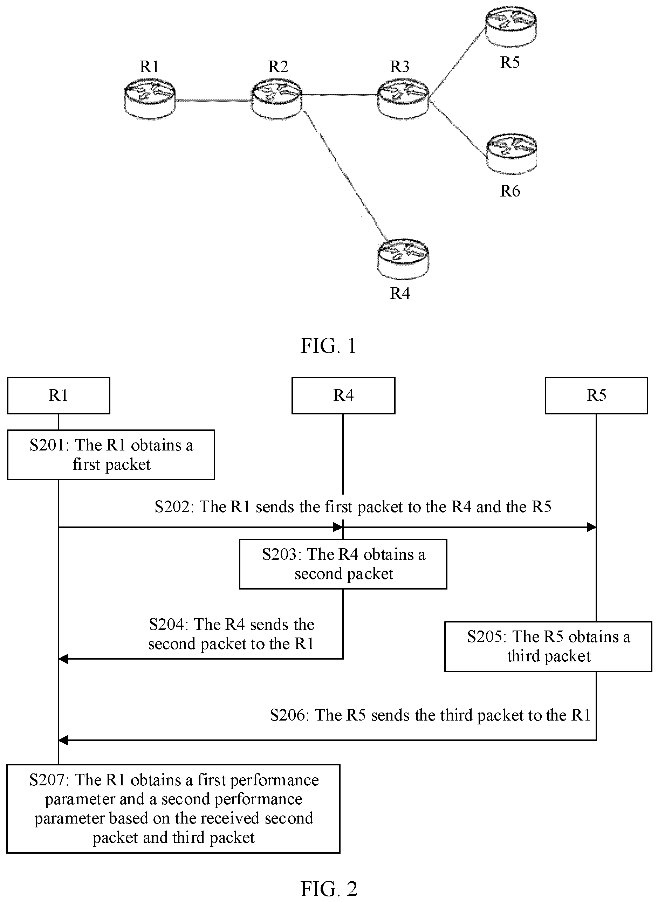

FIG. 1 is a schematic diagram of a network scenario according to an embodiment of this application. In the network scenario shown in FIG. 1, an R1, an R4, an R5, and an R6 are edge bit forwarding routers (bit forwarding routers, BFRs). An R2 and an R3 are intermediate BFRs. When the R1 communicates with a first multicast source, and the R4, the R5, and the R6 communicate with a multicast receiver requesting the first multicast source, the R1 is a BFIR, and the R4, the R5, and the R6 are BFERs. A role of a BFIR or a BFER of a device that is an edge BFR is relative. For example, when the R4 communicates with a second multicast source, and the R1 and the R5 communicate with a multicast receiver requesting the second multicast source, the R4 is a BFIR, and the R1 and the R5 are BFERs. In this embodiment of this application, an example in which the R1 is a BFIR, and the R4, the R5, and the R6 are BFERs is used to describe a performance measurement method provided in embodiments of this application. A performance parameter mentioned in embodiments of this application includes one or more of a delay, a packet loss rate, a jitter, and a throughput. The performance parameters are not described by using examples one by one in the following embodiments of this application.

### Embodiment 1

FIG. 2 is a schematic flowchart of a performance measurement method according to Embodiment 1 of this application. The method provided in Embodiment 1 is applied to the network scenario shown in FIG. 1. The method provided in Embodiment 1 is a method for testing a performance parameter actively. A packet used to obtain the performance parameter may implement performance measurement without depending on forwarding of a multicast data packet. The packet used to obtain the performance parameter is encapsulated into an IP packet or a UDP packet, and is forwarded from a BFIR to a BFER based on a BIER header encapsulated at an outer layer of the IP packet or UDP packet. In the method provided in Embodiment 1 of this application, an example in which the R1 detects performance of paths between the R1 and the R4 and between the R1 and the R5 is used for description. For a method for detecting performance of a path between the R1 and the R6 by the R1, refer to the method for detecting performance of the path between the R1 and the R5. Details are not described herein. The following describes the method provided in Embodiment 1 of this application with reference to FIG. 1 and FIG. 2.

S201: The R1 obtains a first packet.

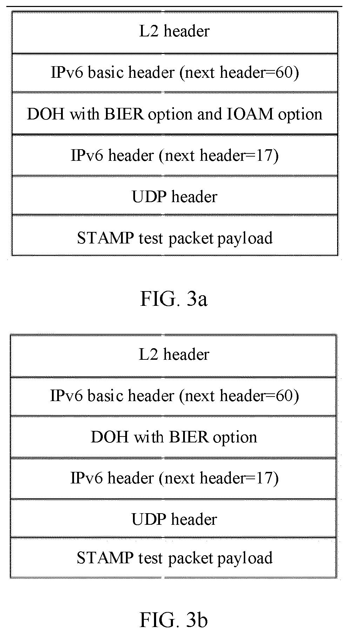

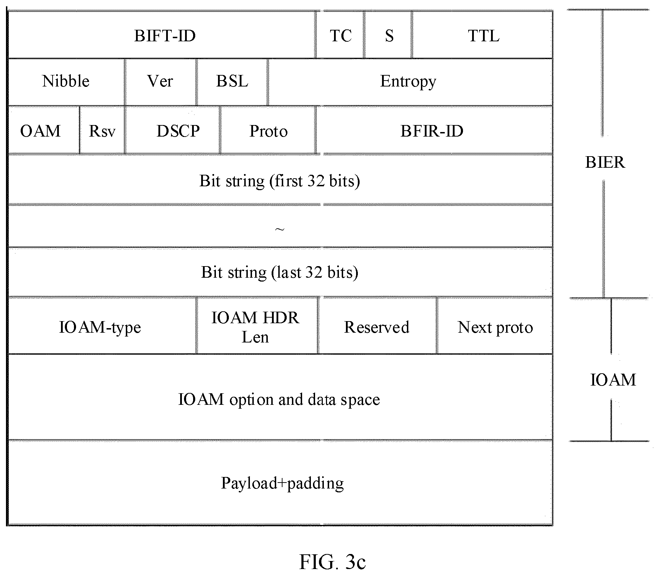

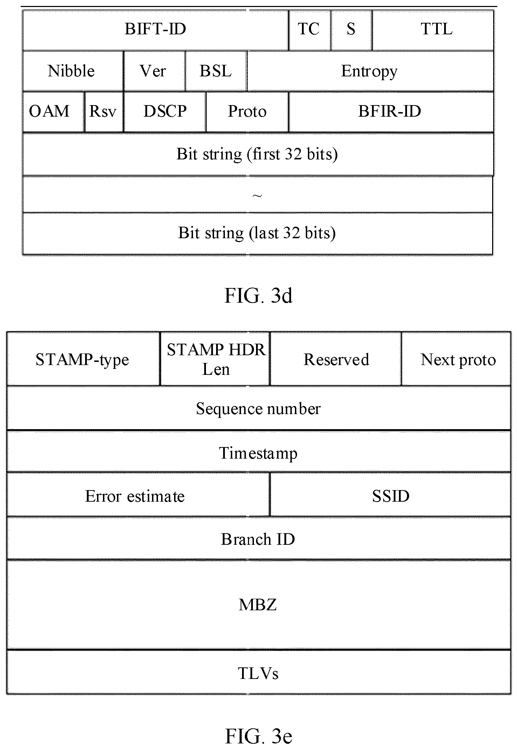

For example, the R1 may serve as a two-way active measurement protocol (Two-Way Active Measurement Protocol, TWAMP) sender (session-sender). The R1 obtains the first packet based on an address of the R1 and an identifier of a BFER. The first packet includes the address of the R1 and a bit string. The first packet is not used to transmit multicast data, that is, the first packet does not perform performance measurement based on a BIER data packet. The identifier of the BFER may be a BFR-ID of the BFER. A bit set to 1 in the bit string corresponds to the BFR-ID of the BFER. In the scenario shown in FIG. 1, a BFR-ID of the R4 is 4, a BFR-ID of the R5 is 5, and a BFR-ID of the R1 is 1. The bit string in the first packet obtained by the R1 may be represented as 00011000, that is, the fourth bit and the fifth bit are set to 1. The fourth bit and the fifth bit may be the fourth bit and the fifth bit from a high bit to a low bit, or may be the fourth bit and the fifth bit from a low bit to a high bit. This is not limited in this embodiment of this application. The first packet may be in a packet format shown in FIG. 3a or FIG. 3b. In the packet format shown in FIG. 3a or FIG. 3b, a next header (next header) whose value is 60 and that is included in an IPv6 basic header indicates that a destination options header (Destination Options header, DOH) is further encapsulated after the Internet Protocol version 6 IPv6 basic header (Internet Protocol version 6 basic header, IPv6 basic header). When the packet format shown in FIG. 3a is used, the DOH further includes a BIER header and an IOAM option (option), and formats of the BIER header and the IOAM option may be packet formats shown in FIG. 3c. A BIER forwarding table identifier (bit index forwarding table identifier, BIFT-ID) included in a BIER header in FIG. 3c is used to search for a BIFT entry for forwarding the first packet. A BFIR-ID is used to identify a BFIR. The bit string is used to identify one or more BFERs that receive the first packet. A parameter included in the BIER header shown in FIG. 3c is used to forward the first packet to the one or more BFERs. The one or more BFERs that receive the first packet may be determined based on a bit set to 1 in the bit string included in a BIER header. For example, if the R1 performs performance measurement on all BFERs in a BIER domain, all bits in the bit string included in the first packet may be set to 1. Alternatively, the R1 may perform performance measurement on some BFERs in the BIER domain based on a requirement, and may set bits that are in the bit string in the first packet and that correspond to the BFERs to 1. An IOAM option and data space (IOAM option and data space) field included in an IOAM option in FIG. 3c may be used to record a node included in a path that the first packet passes through, so that the BFER obtains, from the first packet, the node included in the path that the first packet passes through, and the BFER can implement co-routing and reversing between a packet sent to the R1 and the first packet. The node included in the path that the first packet passes through may be carried in the IOAM option and data space field in FIG. 3c in a form of a node-data-list (node-data-list). When the packet format shown in FIG. 3b is used, the DOH further includes a BIER header, and a format of the BIER header may be a packet format shown in FIG. 3c. For corresponding content of the BIER header shown in FIG. 3d, refer to related content of the BIER header in the packet format shown in FIG. 3c. Details are not described herein again. If the first packet is in the packet format shown in FIG. 3b, the R1 may estimate a performance parameter of a two-way path between the R1 and the BFER based on a performance parameter of a one-way path to the BFER, so that an operation can be simplified and efficiency can be improved.

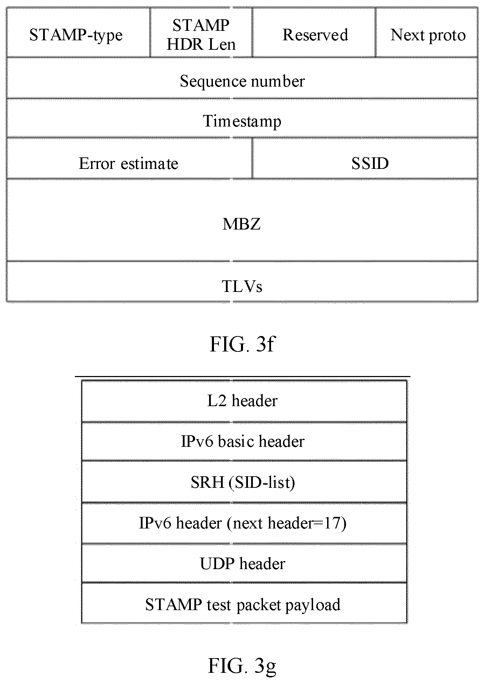

For example, if the first packet is in the packet format shown in FIG. 3a or FIG. 3b, the first packet further includes an IPv6 header (IPv6 header). A next header whose value is 17 and that is included in the IPv6 header indicates that a user datagram protocol (User Datagram Protocol, UDP) packet is further encapsulated after the IPv6 header. A source address (source address, SA) included in the IPv6 header is used to carry the address of the R1. A destination address (destination address, DA) included in the IPv6 header is used to carry a loopback address (loopback address) or a multicast address. The multicast address may be an address that is set to identify that a packet is a multicast packet and that is not used by another device. In the packet format shown in FIG. 3a or FIG. 3b, the first packet further includes the UDP packet, and the UDP packet includes a UDP header (UDP header) and a STAMP test packet (STAMP test packet) that is used as a payload (payload). Optionally, a destination port (destination port) included in the UDP header may be set to 862. The STAMP test packet included in the first packet may be in a packet format shown in FIG. 3e. The first packet further includes a session-identifier (session-identifier, SSID), and the SSID may be added to an SSID field in the STAMP test packet. The SSID included in the first packet is used to identify a session initiated by the R1 serving as the sender. During performance measurement of a packet loss, a sequence number (sequence number) in the STAMP test packet is used to identify a sending sequence of packets, to calculate the packet loss. In performance measurement of a delay or a jitter, a timestamp (timestamp) in the STAMP test packet is used to carry a sending timestamp, to calculate the delay. Optionally, the STAMP test packet may further include a branch identifier (branch ID) field, so that the BFER uses a packet, sent to the R1, to carry the BFR-ID of the BFER. The R1 may add one or more parameters of the sequence number and the sending timestamp to the first packet based on a performance measurement requirement. This is not limited in this embodiment of this application. The branch ID field in the packet format shown in FIG. 3e is an optional field. In another possible implementation, the STAMP test packet included in the first packet may be in a packet format shown in FIG. 3f, and a difference between the packet format shown in FIG. 3f and the packet format shown in FIG. 3e is that the packet format shown in FIG. 3f does not include the branch ID field.

S202: The R1 sends the first packet to the R4 and the R5.

For example, the R1 may search for the corresponding BIFT entry based on the bit string included in the first packet, to determine a next hop. The BIFT entry on the R1 is shown in Table 1. A BFR-ID in Table 1 represents a BFR-ID corresponding to the 1^{st} bit set to 1 in a bit string that needs to be compared. A forwarding bit mask (forwarding bit mask, F-BM) in Table 1 is used to store the bit string compared with the bit string in the first packet. An AND operation is performed on the bit string in the first packet and the F-BM, and a result of the AND operation is used to update the bit string in the first packet. For the first packet obtained by the R1, the 1^{st} bit set to 1 in the bit string whose value is 00011000 in the first packet does not identify the 1^{st} bit set to 1, and an offset that is in the bit string and that is of the 1^{st} bit set to 1 in the bit string is used as a BFR-ID to search Table 1, to obtain the BIFT entry whose BFR-ID is 4. The R1 performs an AND operation on a bit string in a replicated first packet and an F-BM of the BIFT entry, to obtain the bit string whose value is 00011000. A BFR-NBR in Table 1 represents a next-hop neighbor BFR to the BFER corresponding to the bit string in the F-BM. The R1 sends the replicated first packet to the R2 based on the BIFT entry, that is, in the scenario shown in FIG. 1, a next hop for the R1 to the R4 and the R5 is the R2. The R1 performs an AND operation on an inverse operation result 11100111 of the F-BM and the bit string whose value is 00011000 in the first packet. When an AND operation result of all 0s is obtained, the R1 does not search for the BIFT entry and discards the first packet. The replicated first packet received by the R2 is the same as the first packet obtained by the R1, and subsequently, the replicated first packet received by the R2 from the R1 is referred to as the first packet.

**Table 1**

| BFR-ID | F-BM | BFR-NBR |
|---|---|---|
| 4 | 00011000 | R2 |

For example, when the first packet sent by the R1 is in the packet format shown in FIG. 3a, after receiving the first packet, the R2 may add node information of the R2 to the node-data-list in the IOAM option and data space field included in the received first packet, to obtain a fourth packet. A bit string included in the fourth packet is 00011000. The R2 may search for a corresponding BIFT entry based on the bit string included in the fourth packet, as shown in Table 2. The R2 determines that the 1^{st} bit set to 1 in the bit string included in the fourth packet does not identify the 1^{st} bit set to 1, and an offset that is in the bit string and that is of the 1^{st} bit set to 1 in the bit string is used as a BFR-ID to search Table 2, to obtain the BIFT entry whose BFR-ID is 4. The R2 obtains a replicated fourth packet. The R2 performs an AND operation on an F-BM whose value is 00001000 and a bit string whose value is 00011000 and that is included in the replicated fourth packet, to obtain a bit string whose value is 00001000. The R2 updates the bit string in the replicated fourth packet by using 00001000, to obtain a fifth packet. A bit string included in the fifth packet is 00001000. The R2 sends the fifth packet to the BFR-NBR in the BIFT entry whose BFR-ID is 4, that is, the R4. The R2 performs an AND operation on the F-BM in the BIFT entry whose BFR-ID is 4, for example, 11110111 and the bit string whose value is 00011000 in the fourth packet, to obtain an AND operation result of 0001000. The R2 updates the bit string in the fourth packet by using the AND operation result 0001000, to obtain a sixth packet. A bit string carried in the sixth packet is 0001000. The R2 searches Table 2 based on a bit string whose value is 0001000 and that is included in the sixth packet, to obtain a BIFT entry whose BFR-ID is 5. The R2 performs an AND operation on 0001000 in the sixth packet and an F-BM in the BIFT entry whose BFR-ID is 5, to obtain the bit string whose value is 0001000. The R2 updates the bit string in the sixth packet based on the bit string whose value is 00010000, to obtain a seventh packet. A bit string included in the seventh packet is 00010000. The R2 sends the seventh packet to the R3. Based on the foregoing method, the R2 performs an inverse operation on the F-BM in the BIFT entry whose BFR-ID is 5, for example, performs an AND operation on 11101111 and 00010000 that is in the seventh packet. When an AND operation result of all 0s is obtained, the R2 does not continue to search for the BIFT entry and perform a replication operation. The fourth packet to the seventh packet may be in the packet format shown in FIG. 3a. When the first packet sent by the R1 is in the packet format shown in FIG. 3b, the R2 does not need to add the node information, and the R2 may process the first packet according to the foregoing method. Details are not described herein.

**Table 2**

| BFR-ID | F-BM | BFR-NBR |
|---|---|---|
| 4 | 00001000 | R4 |
| 5 | 00010000 | R3 |

For example, when the seventh packet is in the packet format shown in FIG. 3a, after receiving the seventh packet, the R3 may add node information of the R3 to a node-data-list in an IOAM option and data space field included in the received seventh packet, to obtain an eighth packet. The R3 may search for a corresponding BIFT entry based on the bit string included in the eighth packet, as shown in Table 3. The R3 determines that the 1^{st} bit set to 1 in the bit string included in the eighth packet does not identify the 1^{st} bit set to 1, and an offset that is in the bit string and that is of the 1^{st} bit set to 1 in the bit string is used as a BFR-ID to search Table 3, to obtain the BIFT entry whose BFR-ID is 5. The R3 obtains a replicated eighth packet. The R3 performs an AND operation on an F-BM whose value is 00010000 and a bit string whose value is 00010000 and that is included in the replicated eighth packet, to obtain the bit string whose value is 00010000. The R3 updates the bit string in the replicated eighth packet by using 00010000, to obtain a ninth packet. A bit string included in the ninth packet is 00010000. The R3 sends the ninth packet to a BFR-NBR in the BIFT entry whose BFR-ID is 5, that is, the R5. The R3 performs an AND operation on an F-BM in the BIFT entry whose BFR-ID is 5, for example, 11101111 and the bit string whose value is 00010000 in the eighth packet. When an AND operation result of all 0s is obtained, the R3 discards the eighth packet, and does not perform a table searching operation and a replication operation. When the seventh packet is in the packet format shown in FIG. 3b, the R3 does not need to add the node information, and the R3 may process the seventh packet according to the foregoing method. Details are not described herein.

**Table 3**

| BFR-ID | F-BM | BFR-NBR |
|---|---|---|
| 5 | 00010000 | R5 |

For example, when the ninth packet is in the packet format shown in FIG. 3a or FIG. 3b, after receiving the ninth packet, the R5 determines, based on the bit string in the ninth packet, that the ninth packet matches a BFR-ID of the R5, and performs S205. When the fifth packet is in the packet format shown in FIG. 3a or FIG. 3b, after receiving the fifth packet, the R4 determines, based on the bit string in the fifth packet, that the fifth packet matches a BFR-ID of the fifth packet, and performs S203.

S203: The R4 obtains a second packet.

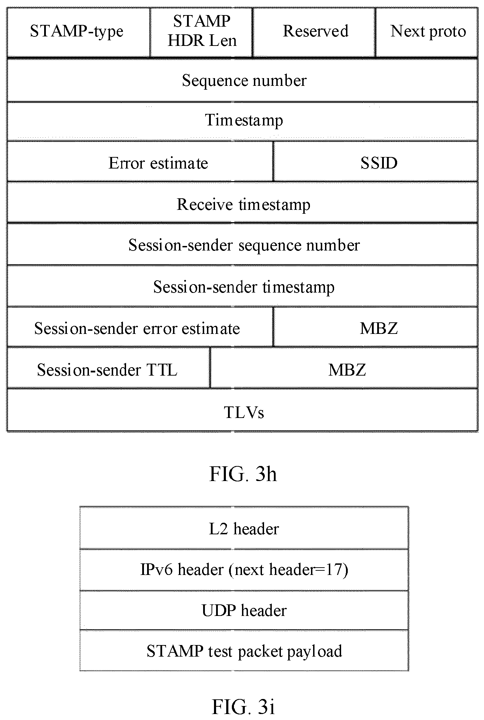

For example, the R4 serves as a session-reflector (session-reflector) of a STAMP test packet. If the fifth packet received by the R4 is in the packet format shown in FIG. 3a and a STAMP test packet of the fifth packet does not include a branch ID field, the R4 may obtain, from the fifth packet, the address of the R1 and the node information carried in the node-data-list in the IOAM option and data space field, for example, the node information of the R2. The R4 obtains an SID-list based on the obtained node information. The R4 obtains the second packet based on the address of the R1, an address of the R4, and a segment ID list (segment identifier list, SID-list). The second packet may be in a packet format shown in FIG. 3g. For example, a next header field in the IPv6 basic header carries 43, which indicates that an SRH is carried after the IPv6 basic header. In the packet format shown in FIG. 3g, a segment routing extension header (Segment Routing header, SRH) of the second packet is used to carry an SID-list obtained from the fifth packet, so that the second packet and the fifth packet are forwarded along a same path, for example, the second packet is forwarded along R4-R2-R1 . A next header whose value is 17 included in an IPv6 header in the second packet indicates that a UDP packet is further encapsulated after the IPv6 header. An SA in the IPv6 header is used to carry the address of the R4, for example, a BFER prefix (prefix) of the R4. ADA included in the IPv6 header is used to carry the address of the R1, for example, a BFIR prefix of the R1. In the packet format shown in FIG. 3g, the second packet further includes the UDP packet, and the UDP packet includes a UDP header and a STAMP test packet. Optionally, a destination port included in the UDP header may be set to 862. The STAMP test packet included in the second packet may be in a packet format shown in FIG. 3h. The R4 adds an SSID included in the fifth packet to an SSID field included in the STAMP test packet of the second packet, so that the R1 can determine an initiated session based on the SSID. When performing performance measurement of a packet loss, the R4 adds a sequence number included in the STAMP test packet of the fifth packet to a session-sender sequence number field included in the second packet, and adds a sequence number of a received packet to the sequence number field of the second packet, so that the R1 that receives the second packet calculates the packet loss. When performing performance measurement of a delay, the R4 adds a send timestamp included in the STAMP test packet of the fifth packet to a session-sender timestamp, and adds a time point at which the fifth packet is received as a receive timestamp to one or more of a timestamp field or a receive timestamp field of the second packet, so that the R1 that receives the second packet calculates the delay.

For example, if the fifth packet received by the R4 is in the packet format shown in FIG. 3b and the STAMP test packet of the fifth packet does not include the branch ID field, the R4 obtains the second packet based on the address of the R1 and the address of the R4. The second packet may be in packet format shown in FIG. 3i, and IP forwarding of the second packet is implemented based on the address of the R1. In the packet format shown in FIG. 3i, a next header whose value is 17 included in an IPv6 header in the second packet indicates that a UDP packet is further encapsulated after the IPv6 header. An SA included in the IPv6 header is used to carry the address of the R4, for example, a BFER prefix of the R4. A DA included in the IPv6 header is used to carry the address of the R1, for example, the BFIR prefix of the R1. In the packet format shown in FIG. 3i, the second packet further includes the UDP packet, and the UDP packet includes a UDP header and a STAMP test packet. Optionally, a destination port included in the UDP header may be set to 862. The STAMP test packet included in the second packet may be in the packet format shown in FIG. 3h. For operations performed by the R4, refer to related content of the operations performed by the R4 on the packet format shown in FIG. 3h. Details are not described herein again.

For example, if the fifth packet received by the R4 is in the packet format shown in FIG. 3a and a STAMP test packet of the fifth packet includes a branch ID field, the R4 adds a BFR-ID of the R4 to the branch ID field, and obtains the second packet based on the packet format shown in FIG. 3g and a STAMP test packet to which a branch ID is added, so that the second packet can be forwarded to the R1 along a same path as the fifth packet. If the fifth packet received by the R4 is in the packet format shown in FIG. 3b and a STAMP test packet of the fifth packet includes a branch ID field, the R4 adds a BFR-ID of the R4 to the branch ID field, and obtains the second packet based on the packet format shown in FIG. 3i and a STAMP test packet to which a branch ID is added, so that the second packet reaches the R1 based on the address of the R1 through IP forwarding.

S204: The R4 sends the second packet to the R1.

For example, if the second packet obtained by the R4 includes the SRH, the second packet is sent to the R1 along the same path as the fifth packet. For example, after receiving the second packet from the R4, the R2 may send the second packet to the R1 based on the node information carried in the SRH by using a common SR technology. If the second packet obtained by the R4 does not include the SRH, the R2 that receives the second packet may send the second packet to the R1 based on the destination address. The second packet is not used to transmit the multicast data.

S205: The R5 obtains the third packet.

For example, the R5 serves as a session-reflector of the STAMP. If the ninth packet received by the R5 is in the packet format shown in FIG. 3a and a STAMP test packet of the ninth packet does not include a branch ID field, the R5 may obtain, from the ninth packet, the address of the R1 and the node information carried in the node-data-list in the IOAM option and data space field, for example, the node information of the R2 and the node information of the R3. The R5 obtains an SID-list based on the obtained node information. The R5 obtains the third packet based on the address of the R1, the address of the R5, and the SID-list. The third packet may be in the packet format shown in FIG. 3g. In the packet format shown in FIG. 3g, an SRH of the third packet is used to carry the SID-list obtained from the ninth packet, so that the third packet and the ninth packet are forwarded along a same path, for example, the third packet is forwarded along R5-R3-R2-R1. A next header whose value is 17 included in an IPv6 header in the third packet indicates that a UDP packet is further encapsulated after the IPv6 header. An SA included in the IPv6 header is used to carry the address of the R5, for example, a BFER prefix of the R5. A DA included in the IPv6 header is used to carry the address of the R1, for example, the BFIR prefix of the R1. In the packet format shown in FIG. 3g, the third packet further includes the UDP packet, and the UDP packet includes a UDP header and a STAMP test packet. Optionally, a destination port included in the UDP header may be set to 862. The STAMP test packet included in the third packet may be in the packet format shown in FIG. 3h. The R5 adds an SSID included in the ninth packet to an SSID field included in the STAMP test packet of the third packet, so that the R1 identifies a session based on the SSID. When performing performance measurement of a packet loss, the R5 adds a sequence number included in the STAMP test packet of the ninth packet to a session-sender sequence number field included in the third packet, and adds a sequence number of a received packet to the sequence number field of the third packet, so that the R1 that receives the third packet calculates the packet loss. When performing performance measurement of a delay, the R5 adds a send timestamp included in the STAMP test packet of the ninth packet to a session-sender timestamp, and adds a time point at which the ninth packet is received as a receive timestamp to one or more of a timestamp field or a receive timestamp field of the third packet, so that the R1 that receives the third packet calculates the delay. The third packet is not used to transmit the multicast data.

For example, if the first packet received by the R5 is in the packet format shown in FIG. 3b and the STAMP test packet of the first packet does not include the branch ID field, the R5 obtains the third packet based on the address of the R1 and the address of the R5. The third packet may be in packet format shown in FIG. 3i, and IP forwarding of the third packet is implemented based on the address of the R1. In the packet format shown in FIG. 3i, a next header whose value is 17 included in an IPv6 header in the third packet indicates that a UDP packet is further encapsulated after the IPv6 header. An SA included in the IPv6 header is used to carry the address of the R5, for example, the BFER prefix of the R5. A DA included in the IPv6 header is used to carry the address of the R1, for example, the BFIR prefix of the R1. In the packet format shown in FIG. 3i, the third packet further includes the UDP packet, and the UDP packet includes a UDP header and a STAMP test packet. Optionally, a destination port included in the UDP header may be set to 862. The STAMP test packet included in the third packet may be in the packet format shown in FIG. 3h. For operations performed by the R5, refer to related content of the operations performed by the R5 on the packet format shown in FIG. 3h. Details are not described herein again.

For example, if the ninth packet received by the R5 is in the packet format shown in FIG. 3a and the STAMP test packet of the ninth packet includes the branch ID field, the R5 adds the BFR-ID of the R5 to the branch ID field, and obtains the third packet based on the packet format shown in FIG. 3g and the STAMP test packet to which a branch ID is added, so that the third packet can be forwarded to the R1 along a same path as the ninth packet. If the ninth packet received by the R5 is in the packet format shown in FIG. 3b and the STAMP test packet of the ninth packet includes the branch ID field, the R5 adds the BFR-ID of the R5 to the branch ID field, and obtains the third packet based on the packet format shown in FIG. 3i and the STAMP test packet to which the branch ID is added, so that the third packet reaches the R1 based on the address of the R1 through IP forwarding.

S206: The R5 sends the third packet to the R1.

For example, if the third packet obtained by the R5 includes an SRH, the third packet is sent to the R1 along a same path as the ninth packet. For example, after receiving the third packet from the R5, the R3 may send the third packet to the R2 based on the node information of the R2 that is carried in the SRH by using the common SR technology. After receiving the third packet from the R3, the R2 may send the third packet to the R1 based on the node information of the R1 that is carried in the SRH by using the common SR technology. If the third packet obtained by the R5 does not include the SRH, the R3 and the R2 may send the third packet to the R1 based on a destination address included in the third packet.

S207: The R1 obtains a first performance parameter and a second performance parameter based on the received second packet and third packet.

For example, when the second packet includes a branch ID field, after receiving the second packet, the R1 obtains the first performance parameter based on a parameter carried in the second packet, and associates the first performance parameter with end-to-end performance between the R1 and the R4 that is indicated by the branch ID field. The first performance parameter may be one or more of a packet loss and a delay. The R1 may calculate the packet loss based on the sequence number field and the session-sender sequence number field in the STAMP test packet included in the second packet. The R1 may calculate the delay based on the timestamp field and the session-sender timestamp field in the STAMP test packet included in the second packet, or calculate the delay based on the receive timestamp field and the session-sender timestamp field in the STAMP test packet included in the second packet. When the second packet does not include the branch ID field, the R1 may determine, based on an SA field in the received second packet, that the first performance parameter corresponds to the end-to-end performance between the R1 and the R4. For a method for obtaining the second performance parameter based on the third packet by the R1, refer to the method for obtaining the first performance parameter by the R1. Details are not described herein again. When the third packet includes a branch ID field, the R1 may determine, based on the R5 indicated by the branch ID field in the received third packet, that the second performance parameter corresponds to end-to-end performance between the R1 and the R5. When the third packet does not include the branch ID field, the R1 may determine, based on an SA field in the received third packet, that the second performance parameter corresponds to the end-to-end performance between the R1 and the R5.

According to the method provided in this embodiment of this application, the R1 serving as the BFIR actively sends, based on a BIER technology and a STAMP technology, a probe packet, for example, the first packet, to obtain end-to-end performance between the BFIR and the one or more BFERs, for example, obtain end-to-end performance between the BFIR and the BFER based on one or more of the second packet and the third packet. In this way, end-to-end performance measurement is implemented without depending on forwarding of the BIER data packet. This improves flexibility.

### Embodiment 2

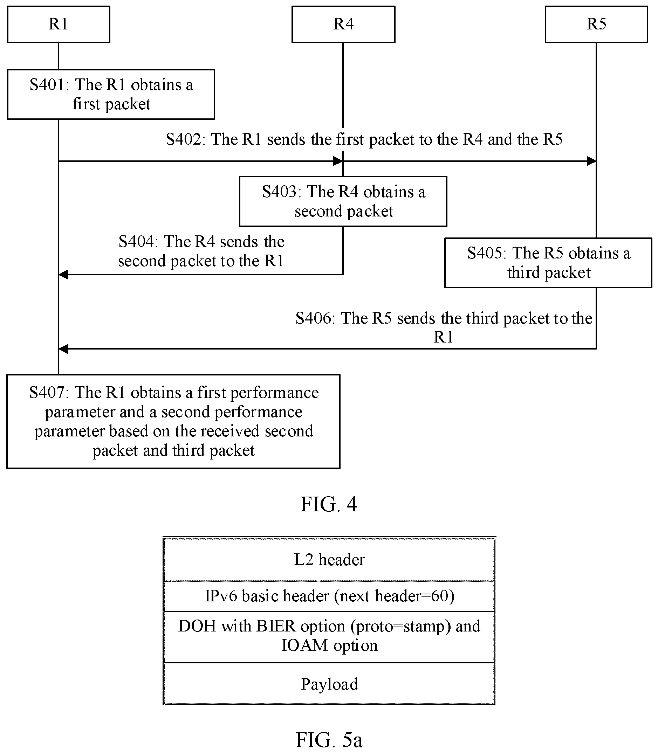

FIG. 4 is a schematic flowchart of a performance measurement method according to Embodiment 2 of this application. The method provided in Embodiment 2 may be applied to the scenario shown in FIG. 1. In the method provided in Embodiment 2, a packet used to obtain a performance parameter is encapsulated into a BIER packet. Compared with the method provided in Embodiment 1, the method provided in Embodiment 2 can reduce IP encapsulation or UDP encapsulation. In Embodiment 2, a method for sending a packet to a BFIR by a node serving as a BFER is the same as that in Embodiment 1. The method provided in Embodiment 2 of this application is described by using an example in which the R1 detects performance of paths between the R1 and the R4 and between the R1 and the R5. For a method for detecting performance of a path between the R1 and the R6, refer to the method used for detecting performance of the path between the R1 and the R5. Details are not described herein again. The following describes the method provided in Embodiment 2 of this application with reference to FIG. 1 and FIG. 4.

S401: The R1 obtains a first packet.

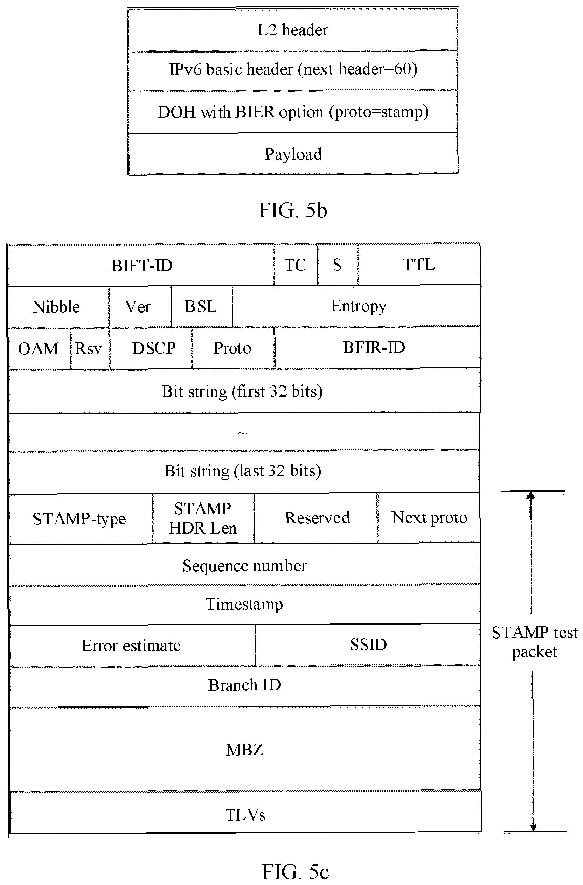

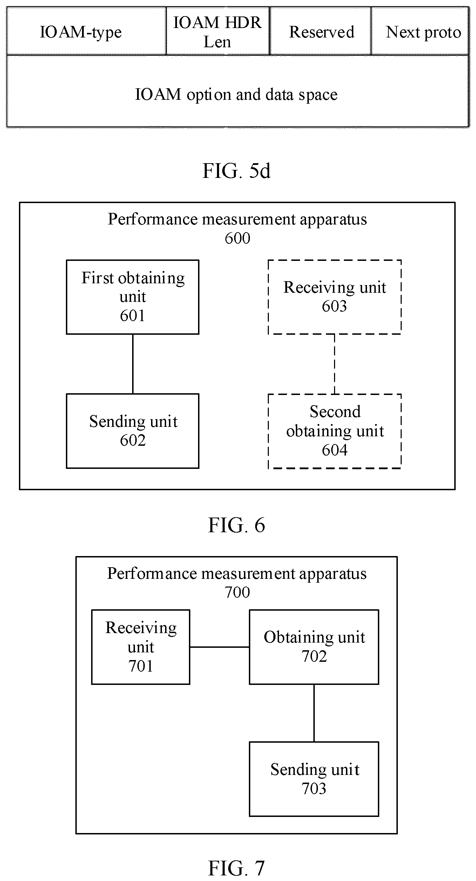

For example, the R1 may serve as a TWAMP session-sender. The R1 obtains the first packet based on an address of the R1 and an identifier of the BFER. The first packet includes the address of the R1 and a bit string. The identifier of the BFER may be a BFR-ID of the BFER. A bit whose value is set to 1 in the bit string corresponds to the BFR-ID of the BFER. For example, in the scenario shown in FIG. 1, a BFR-ID of the R4 is 4, a BFR-ID of the R5 is 5, and a BFR-ID of the R1 is 1. The bit string in the first packet obtained by the R1 may be represented as 00011000, that is, the fourth bit and the fifth bit are set to 1. The fourth bit and the fifth bit may be the fourth bit and the fifth bit from a high bit to a low bit, or may be the fourth bit and the fifth bit from a low bit to a high bit. This is not limited in this embodiment of this application. The first packet may be in a packet format shown in FIG. 3a or FIG. 3b. In a packet format shown in FIG. 5a or FIG. 5b, a next header whose value is 60 and that is included in an IPv6 basic header indicates that a DOH is further encapsulated after the IPv6 basic header. When the packet format shown in FIG. 5a is used, the DOH further includes a BIER header and an IOAM option (option). Proto in the BIER header indicates that a STAMP test packet is carried after the BIER header. For details, refer to a packet format shown in FIG. 5c. For meanings of fields in the packet format shown in FIG. 5c, refer to the content corresponding to the packet formats shown in FIG. 3d and FIG. 3e in Embodiment 1. Details are not described herein again. A format of the IOAM option may be a packet format shown in FIG. 5d. For a specific meaning, refer to the part about the IOAM option in the packet format shown in FIG. 3c in Embodiment 1. It should be noted that the STAMP test packet in the packet format shown in FIG. 5c in Embodiment 2 may be replaced with that in FIG. 3f in Embodiment 1, that is, the STAMP test packet carried after the BIER header does not include a branch ID field. For a method for obtaining the first packet by the R1, refer to the corresponding content in S201 in Embodiment 1. Details are not described herein again. The first packet is not used to transmit multicast data.

S402: The R1 sends the first packet to the R4 and the R5.

For example, for a method in which the R1 sends the first packet to the R4 and the R5 by using the R2 and the R3, refer to the corresponding content in S202 in Embodiment 1. Details are not described herein again.

S403: The R4 obtains a second packet.

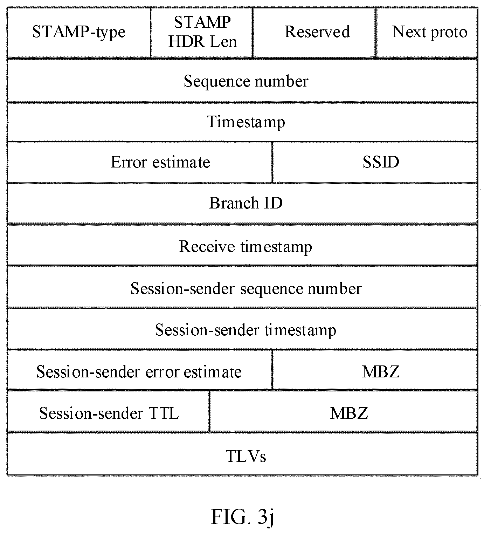

For example, for a method for obtaining the second packet by the R4, refer to the corresponding content in S203 in Embodiment 1. Details are not described herein again. For a format of the second packet in Embodiment 2, refer to the corresponding content of the second packet in Embodiment 1, and the packet formats shown in FIG. 3g, FIG. 3h, FIG. 3i, and FIG. 3j. Details are not described herein again. The second packet is not used to transmit multicast data.

S404: The R4 sends the second packet to the R1.

For example, for a method for sending the second packet by the R4, refer to the corresponding content in S204 in Embodiment 1. Details are not described herein again.

S405: The R5 obtains a third packet.

For example, for a method for obtaining the third packet by the R5, refer to the corresponding content in S205 in Embodiment 1. Details are not described herein again. For a format of the third packet in Embodiment 2, refer to the corresponding content of the third packet in Embodiment 1, and the packet formats shown in FIG. 3g, FIG. 3h, FIG. 3i, and FIG. 3j. Details are not described herein again. The third packet is not used to transmit multicast data.

S406: The R5 sends the third packet to the R1.

For example, for a method for sending the third packet by the R5, refer to the corresponding content in S206 in Embodiment 1. Details are not described herein again.

S407: The R1 obtains a first performance parameter and a second performance parameter based on the received second packet and third packet.

For example, for a method for obtaining the first performance parameter and the second performance parameter by the R1, refer to the corresponding content in S207 in Embodiment 1. Details are not described herein again.

According to the method provided in this embodiment of this application, the R1 serving as a BFIR sends, based on a BIER technology and a STAMP technology, a probe packet, for example, the first packet, to obtain end-to-end performance between the BFIR and one or more BFERs, for example, obtain end-to-end performance between the BFIR and the BFER based on one or more of the second packet and the third packet. In this embodiment, IP encapsulation or UDP encapsulation does not need to be performed on the first packet. This further reduces overheads and improves forwarding efficiency.

FIG. 6 is a schematic diagram of a structure of a performance measurement apparatus disposed in a BFIR according to an embodiment of this application. The apparatus shown in FIG. 6 is disposed on the R1 that serves as a BFIR in the method provided in any possible embodiment of Embodiment 1 and Embodiment 2, that is, the R1 in the scenario shown in FIG. 1. The embodiment corresponding to FIG. 6 describes, from a perspective of a logical structure, the performance measurement apparatus. Any unit included in the performance measurement apparatus provided in the embodiment corresponding to FIG. 6 may be implemented by one or more subunits. This is not limited in this embodiment of this application.

The apparatus 600 for measuring performance provided in the embodiment corresponding to FIG. 6 is disposed in the BFIR in a BIER domain. The apparatus 600 includes a first obtaining unit 601 and a sending unit 602. The first obtaining unit 601 is configured to obtain a first packet. The first packet includes an identifier of the BFIR, a bit string, and a first parameter that is used for performance measurement. The bit string is used to identify one or more BFERs, and the first packet is not used to transmit multicast data. The sending unit 602 is configured to send the first packet to the one or more BFERs based on the bit string included in the first packet. The first packet includes a BIER header and a STAMP test packet. The BIER header is used to carry the bit string. The STAMP test packet is used to carry the first parameter.

In a possible implementation, the first packet includes an IPv6 basic header. A next header field of the IPv6 basic header indicates that a DOH is encapsulated. The DOH is used to carry the BIER header. A payload of the first packet is used to carry the STAMP test packet. Alternatively, in another possible implementation, the DOH is used to carry the BIER header and the STAMP test packet that is used as a payload.

To implement co-routing and reversing between forwarding paths of a packet sent by the BFER to the BFIR and the first packet, the first packet further includes a node table used to carry node information of an intermediate BFR. For example, the first packet includes a BIER header, an IOAM option, and a STAMP test packet. The BIER header is used to carry the bit string. The IOAM option is used to carry the node table. The STAMP test packet is used to carry the first parameter. Alternatively, in a possible implementation, the first packet includes an IPv6 basic header. A next header field of the IPv6 basic header indicates that a DOH is encapsulated. The DOH is used to carry the BIER header and the IOAM option. A payload of the first packet is used to carry the STAMP test packet. Alternatively, the DOH is used to carry the BIER header, the IOAM option, and the STAMP test packet that is used as a payload.
In a possible implementation, the apparatus 600 further includes a receiving unit 603 and a second obtaining unit 604. The receiving unit 603 is configured to receive a second packet sent by a first BFER in the one or more BFERs. The second packet includes an identifier of the first BFER, a second parameter, and the first parameter. The second packet is not used to transmit multicast data. The second parameter and the first parameter are parameters of a same type. The second obtaining unit 604 is configured to obtain, based on the second parameter and the first parameter, a performance parameter corresponding to a path between the first BFER and the BFIR.

In a possible implementation, the second packet includes a STAMP test packet. The STAMP test packet includes a branch ID, the first parameter, and the second parameter. The branch ID is used to carry the identifier of the first BFER.

In a possible implementation, the second packet further includes an SRH. The SRH is used to carry node information of an intermediate BFR between the BFIR and the first BFER.

In a possible implementation, a source address of the second packet is an address of the first BFER. A destination address of the second packet is an address of the BFIR.

For example, the first obtaining unit 601 of the apparatus 600 is configured to support the apparatus 600 in performing S201 performed by the R1 in Embodiment 1 and S401 performed by the R1 in Embodiment 2. The sending unit 602 of the apparatus 600 is configured to support the apparatus 600 in performing S202 performed by the R1 in Embodiment 1 and S402 performed by the R1 in Embodiment 2. The receiving unit 603 and the second obtaining unit 604 of the apparatus 600 are configured to support the apparatus 600 in performing S207 performed by the R1 in Embodiment 1 and S407 performed by the R1 in Embodiment 2.

FIG. 7 is a schematic diagram of a structure of a performance measurement apparatus disposed in a BFER according to an embodiment of this application. The apparatus shown in FIG. 7 is disposed in the R4, the R5, or the R6 that serves as a BFER in the method provided in any possible embodiment of Embodiment 1 and Embodiment 2. The embodiment corresponding to FIG. 7 describes, from a perspective of a logical structure, the performance measurement apparatus. Any unit included in the performance measurement apparatus provided in the embodiment corresponding to FIG. 7 may be implemented by one or more subunits. This is not limited in this embodiment of this application.

The apparatus 700 for measuring performance provided in the embodiment corresponding to FIG. 7 is disposed in the BFER in a BIER domain. The apparatus 700 includes a receiving unit 701. The receiving unit 701 is configured to receive a first packet sent by a bit forwarding ingress router BFIR, where the first packet includes an identifier of the BFIR, a bit string, and a first parameter that is used for performance measurement, and the first packet is not used to transmit multicast data. The bit string is used to identify one or more BFERs. The one or more BFERs include the BFER.

In a possible implementation, the first packet includes a BIER header and a STAMP test packet. The BIER header is used to carry the bit string. The STAMP test packet is used to carry the first parameter.

In a possible implementation, the first packet includes an IPv6 basic header. A next header field of the IPv6 basic header indicates that a DOH is encapsulated. The DOH is used to carry the BIER header. A payload of the first packet is used to carry the STAMP test packet. Alternatively, the DOH is used to carry the BIER header and the STAMP test packet that is used as a payload.

In a possible implementation, the first packet further includes a node table used to carry node information of an intermediate BFR. For example, the first packet includes a BIER header, an IOAM option, and a STAMP test packet. The BIER header is used to carry the bit string. The IOAM option is used to carry the node table. The STAMP test packet is used to carry the first parameter. Alternatively, the first packet includes an IPv6 basic header. A next header field of the IPv6 basic header indicates that a DOH is encapsulated. The DOH is used to carry the BIER header and the IOAM option. A payload of the first packet is used to carry the STAMP test packet. Alternatively, the DOH is used to carry the BIER header, the IOAM option, and the STAMP test packet that is used as a payload.

In a possible implementation, the apparatus further includes an obtaining unit 702 and a sending unit 703. The obtaining unit 702 is configured to obtain a second packet based on the first packet. The second packet includes an identifier of the BFER, a second parameter, and the first parameter. The second parameter and the first parameter are performance parameters of a same type. The sending unit 703 is configured to send the second packet to the BFIR. The second packet is not used to transmit multicast data.

In a possible implementation, the second packet includes a STAMP test packet. The STAMP test packet includes a branch ID, the first parameter, and the second parameter. The branch ID is used to carry the identifier of the BFER.

In a possible implementation, the second packet further includes an SRH. The SRH is used to carry node information of an intermediate BFR between the BFIR and the BFER.

In a possible implementation, a source address of the second packet is an address of the BFER, and a destination address of the second packet is an address of the BFIR.

For example, the obtaining unit 702 of the apparatus 700 is configured to support the apparatus 700 in performing S203 performed by the R4 or S205 performed by the R5 in Embodiment 1, and is configured to support the apparatus 700 in performing S403 performed by the R4 or S405 performed by the R5 in Embodiment 2. The sending unit 703 of the apparatus 700 is configured to support the apparatus 700 in performing S204 performed by the R4 or S206 performed by the R5 in Embodiment 1, and is configured to support the apparatus 700 in performing S404 performed by the R4 or S406 performed by the R5 in Embodiment 2.

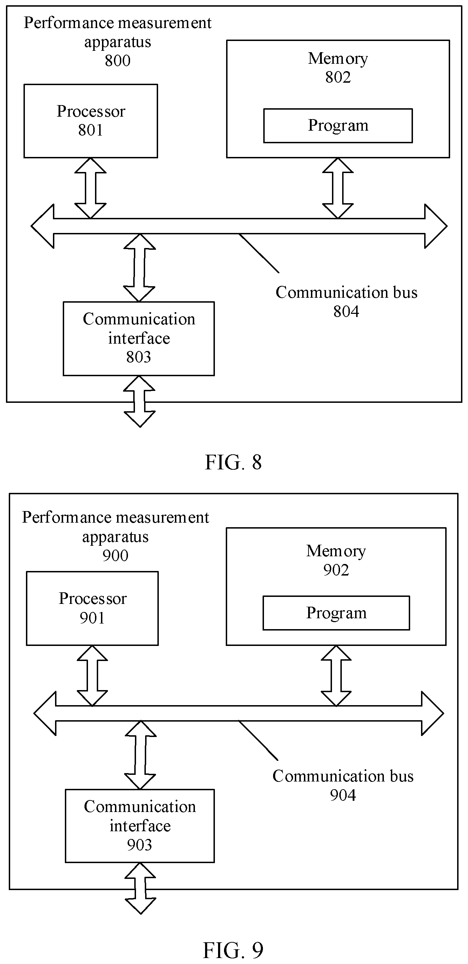

FIG. 8 is a schematic diagram of a structure of another performance measurement apparatus disposed in a BFIR according to an embodiment of this application. The apparatus 800 provided in the embodiment corresponding to FIG. 8 may be disposed in the R1 that serves as the BFIR provided in any one of Embodiment 1 and Embodiment 2. The apparatus 800 and the apparatus 600 may be a same apparatus. The apparatus 800 is an apparatus structure displayed from a perspective of a hardware structure, and the apparatus 600 is an apparatus structure displayed from a perspective of a logical structure. The apparatus 800 includes a processor 801, a memory 802, a communication bus 804, and a communication interface 803. The processor 801, the memory 802, and the communication interface 803 are connected by using the communication bus 804. The memory 802 is configured to store a program. When the apparatus 800 is disposed in the BFIR mentioned in any one of Embodiment 1 and Embodiment 2, the processor 801 performs, based on an executable instruction included in the program read from the memory 802, the method performed by the R1 that serves as the BFIR in any one of Embodiment 1 and Embodiment 2.

For example, the processor 801 included in the apparatus 800 is configured to support the apparatus 800 in performing S201, S202, and S207 performed by the R1 that serves as the BFIR in Embodiment 1. The processor 801 included in the apparatus 800 is configured to support the apparatus 800 in performing S401, S402, and S407 performed by the R1 that serves as the BFIR in Embodiment 2. The processor 801 of the apparatus 800 is configured to implement functions of the first obtaining unit 601 and the second obtaining unit 604 included in the apparatus 600. The communication interface 803 of the apparatus 800 is configured to implement functions of the sending unit 602 and the receiving unit 603 included in the apparatus 600.

FIG. 9 is a schematic diagram of a structure of another performance measurement apparatus disposed in a BFER according to an embodiment of this application. The apparatus 900 provided in the embodiment corresponding to FIG. 9 may be disposed in the R4 or the R5 that serves as the BFER and that is provided in any one of Embodiment 1 and Embodiment 2. The apparatus 900 and the apparatus 700 may be a same apparatus. The apparatus 900 is an apparatus structure displayed from a perspective of a hardware structure, and the apparatus 700 is an apparatus structure displayed from a perspective of a logical structure. The apparatus 900 includes a processor 901, a memory 902, a communication bus 904, and a communication interface 903. The processor 901, the memory 902, and the communication interface 903 are connected by using the communication bus 904. The memory 902 is configured to store a program. When the apparatus 900 is disposed in the BFER mentioned in any one of Embodiment 1 and Embodiment 2, the processor 901 performs, based on an executable instruction included in the program read from the memory 902, the method performed by the R4 or the R5 that serves as the BFER in any one of Embodiment 1 and Embodiment 2.

For example, the processor 901 included in the apparatus 900 is configured to support the apparatus 900 in performing S203 and S204 performed by the R4 that serves as the BFER or S205 and S206 performed by the R5 in Embodiment 1. The processor 901 included in the apparatus 900 is configured to support the apparatus 900 in performing S403 and S404 performed by the R4 that serves as the BFER or S405 and S406 performed by the R5 in Embodiment 2. The processor 901 of the apparatus 900 is configured to implement a function of the obtaining unit 702 included in the apparatus 700. The communication interface 903 of the apparatus 900 is configured to implement functions of the sending unit 703 and the receiving unit 701 included in the apparatus 700.

An embodiment of this application provides a system. The system includes the apparatus 600 for measuring performance disposed in a BFIR provided in the embodiment corresponding to FIG. 6 and the apparatus 700 for measuring performance disposed in a BFER provided in the embodiment corresponding to FIG. 7, or the system includes the apparatus 800 for measuring performance set on a BFIR disposed in the embodiment corresponding to FIG. 8 and the apparatus 900 for measuring performance disposed in a BFER provided in the embodiment corresponding to FIG. 9. The apparatus 600 or the apparatus 800 may be configured to perform the method performed by the R1 that serves as the BFIR in Embodiment 1 or Embodiment 2. The apparatus 700 or the apparatus 900 may be configured to perform the method performed by the R4 that serves as the BFER or the R5 in Embodiment 1 or Embodiment 2.

In the specification, claims, and accompanying drawings of this application, the terms "first", "second", "third", "fourth", and so on are intended to distinguish between similar objects but do not necessarily indicate a specific sequence or order. It should be understood that the data termed in such a way are interchangeable in proper circumstances so that embodiments of the present invention described herein can be implemented in other orders than the order illustrated or described herein. In addition, the terms "include", "have" and any other variants thereof are intended to cover non-exclusive inclusion. For example, a process, method, system, product, or device that includes a list of steps or units is not necessarily limited to those steps or units that are expressly listed, but may include other steps or units that are not expressly listed or inherent to the process, method, product, or device.

In this application, "at least one item (piece)" means one or more, and "a plurality of" means two or more. At least one of the following items (pieces) or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural. In this application, it is considered that "A and/or B" includes only A, only B, and A and B.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical module division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be obtained based on actual requirements to achieve the objectives of the solutions of embodiments.

In addition, module units in embodiments of this application may be integrated into one processing unit, or each of the units may exist alone physically, or two or more units are integrated into one unit. The integrated unit may be implemented in a form of hardware, or may be implemented in a form of a software module unit.

When the integrated unit is implemented in the form of a software module unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in the embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

Persons skilled in the art should be aware that in the foregoing one or more examples, functions described in the present invention may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The objectives, technical solutions, and beneficial effects of the present invention are further described in detail in the foregoing specific implementations. It should be understood that the foregoing descriptions are merely specific implementations of the present invention.

## Claims

1. A performance measurement method, wherein the method comprises:
obtaining (S201), by a bit forwarding ingress router, BFIR, a first packet, wherein the first packet comprises an identifier of the BFIR, a bit string, and a first parameter that is used for performance measurement, the bit string is used to identify one or more bit forwarding egress routers, BFERs, and the first packet is not used to transmit multicast data; and
sending (S202), by the BFIR, the first packet to the one or more BFERs based on the bit string comprised in the first packet,
wherein the first packet comprises a Bit Index Explicit Replication, BIER, header and a simple two-way active measurement protocol, STAMP, test packet, the BIER header is used to carry the bit string, and the STAMP test packet is used to carry the first parameter.

2. The method according to claim 1, wherein the method further comprises:
receiving (S204), by the BFIR, a second packet sent by a first BFER in the one or more BFERs, wherein the second packet comprises an identifier of the first BFER, a second parameter, and the first parameter, and the second parameter and the first parameter are performance parameters of a same type; and
obtaining (S207), by the BFIR based on the second parameter and the first parameter, a performance parameter corresponding to a path between the first BFER and the BFIR.

3. The method according to any of claims 1 or 2, wherein the first packet comprises an Internet Protocol version 6, IPv6, basic header, a next header field of the IPv6 basic header indicates that a destination options header, DOH, is encapsulated, the DOH is used to carry the BIER header, and a payload of the first packet is used to carry the STAMP test packet.

4. The method according to any of claims 1 or 2, wherein the first packet comprises an IPv6 basic header, a next header field of the IPv6 basic header indicates that a DOH is encapsulated, and the DOH is used to carry the BIER header and the STAMP test packet that is used as a payload.

5. The method according to claim 1 or 2, wherein the first packet further comprises a node table used to carry node information of an intermediate bit forwarding router, BFR.

6. The method according to claim 5, wherein the first packet comprises a BIER header, an in-band operations, administration, and maintenance, IOAM, option, and a STAMP test packet, the BIER header is used to carry the bit string, the IOAM option is used to carry the node table, and the STAMP test packet is used to carry the first parameter.

7. A performance measurement apparatus (600), wherein the apparatus is disposed in a bit forwarding ingress router, BFIR, and comprises:
a first obtaining unit (601), configured to obtain a first packet, wherein the first packet comprises an identifier of the BFIR, a bit string, and a first parameter that is used for performance measurement, the bit string is used to identify one or more bit forwarding egress routers, BFERs, and the first packet is not used to transmit multicast data; and
a sending unit (602), configured to send the first packet to the one or more BFERs based on the bit string comprised in the first packet,
wherein the first packet comprises a Bit Index Explicit Replication, BIER, header and a simple two-way active measurement protocol, STAMP, test packet, the BIER header is used to carry the bit string, and the STAMP test packet is used to carry the first parameter.

8. The apparatus (600) according to claim 7, wherein the apparatus further comprises:
a receiving unit (603), configured to receive a second packet sent by a first BFER in the one or more BFERs, wherein the second packet comprises an identifier of the first BFER, a second parameter, and the first parameter, and the second parameter and the first parameter are performance parameters of a same type; and
a second obtaining unit (604), configured to obtain, based on the second parameter and the first parameter, a performance parameter corresponding to a path between the first BFER and the BFIR.

9. The apparatus (600) according to claim 7 or 8, wherein the first packet comprises an Internet Protocol version 6, IPv6, basic header, a next header field of the IPv6 basic header indicates that a destination options header, DOH, is encapsulated, the DOH is used to carry the BIER header, and a payload of the first packet is used to carry the STAMP test packet.

10. The apparatus (600) according to any of claims 7 or 8, wherein the first packet comprises an IPv6 basic header, a next header field of the IPv6 basic header indicates that a DOH is encapsulated, and the DOH is used to carry the BIER header and the STAMP test packet that is used as a payload.

11. The apparatus (600) according to claim 7 or 8, wherein the first packet further comprises a node table used to carry node information of an intermediate bit forwarding router, BFR.

12. The apparatus (600) according to claim 11, wherein the first packet comprises a BIER header, an in-band operations, administration, and maintenance, IOAM, option, and a STAMP test packet, the BIER header is used to carry the bit string, the IOAM option is used to carry the node table, and the STAMP test packet is used to carry the first parameter.

13. The apparatus (600) according to claim 12, wherein the first packet comprises an IPv6 basic header, a next header field of the IPv6 basic header indicates that a DOH is encapsulated, the DOH is used to carry the BIER header and the IOAM option, and a payload of the first packet is used to carry the STAMP test packet.

## Patentansprüche

1. Leistungsmessverfahren, wobei das Verfahren Folgendes umfasst:
Empfangen (S201), durch einen Bit-Weiterleitungs-Eingangsrouter, BFIR, eines ersten Pakets, wobei das erste Paket eine Kennung des BFIR, eine Bitfolge und einen ersten Parameter,
der zur Leistungsmessung verwendet wird, umfasst, die Bitfolge verwendet wird, um einen oder mehrere Bit-Weiterleitungs-Ausgangsrouter, BFERs, zu identifizieren, und das erste Paket nicht verwendet wird, um Multicast-Daten zu übertragen; und
Senden (S202), durch den BFIR, des ersten Pakets an den einen oder die mehreren BFERs basierend auf der in dem ersten Paket umfassten Bitfolge,
wobei das erste Paket einen Header für bitindizierte explizite Replikation, BIER, und ein einfaches Zwei-Wege-Aktivmessprotokoll-Testpaket, STAMP-Testpaket, umfasst, der BIER-Header zum Tragen der Bitfolge verwendet wird und das STAMP-Testpaket zum Tragen des ersten Parameters verwendet wird.

2. Verfahren nach Anspruch 1, wobei das Verfahren ferner Folgendes umfasst:
Empfangen (S204), durch den BFIR, eines zweiten Pakets, das durch einen ersten BFER in dem oder den mehreren BFERs gesendet wird, wobei das zweite Paket eine Kennung des ersten BFER, einen zweiten Parameter und den ersten Parameter umfasst und der zweite Parameter und der erste Parameter Leistungsparameter desselben Typs sind; und
Erlangen (S207), durch den BFIR basierend auf dem zweiten Parameter und dem ersten Parameter, eines Leistungsparameters, der einem Pfad zwischen dem ersten BFER und dem BFIR entspricht.

3. Verfahren nach einem der Ansprüche 1 oder 2, wobei das erste Paket einen Basis-Header des Internetprotokolls Version 6, IPv6, umfasst, ein nächstes Header-Feld des IPv6-Basis-Headers angibt, dass ein Zieloptionen-Header, DOH, gekapselt ist, der DOH zum Tragen des BIER-Headers verwendet wird und Nutzdaten des ersten Pakets zum Tragen des STAMP-Testpakets verwendet werden.

4. Verfahren nach einem der Ansprüche 1 oder 2, wobei das erste Paket einen IPv6-Basis-Header umfasst, ein nächstes Header-Feld des IPv6-Basis-Headers angibt, dass ein DOH gekapselt ist, und der DOH zum Tragen des BIER-Headers und des als Nutzdaten verwendeten STAMP-Testpakets verwendet wird.

5. Verfahren nach Anspruch 1 oder 2, wobei das erste Paket ferner eine Knotentabelle, die zum Tragen von Knoteninformationen eines Zwischenbit-Weiterleitungs-Routers, BFR, verwendet wird, umfasst.

6. Verfahren nach Anspruch 5, wobei das erste Paket einen BIER-Header, eine Betriebs-, Verwaltungs- und Wartungsoption innerhalb des Frequenzbandes, IOAM-Option, und ein STAMP-Testpaket umfasst, der BIER-Header zum Tragen der Bitfolge verwendet wird, die IOAM-Option zum Tragen der Knotentabelle verwendet wird und das STAMP-Testpaket zum Tragen des ersten Parameters verwendet wird.

7. Leistungsmessvorrichtung (600), wobei die Vorrichtung in einem Bit-Weiterleitungs-Eingangsrouter, BFIR, angeordnet ist und Folgendes umfasst:
eine erste Erlangungseinheit (601), die dazu konfiguriert ist, ein erstes Paket zu erlangen, wobei das erste Paket eine Kennung des BFIR, eine Bitfolge und einen ersten Parameter, der zur Leistungsmessung verwendet wird, umfasst, die Bitfolge verwendet wird, um einen oder mehrere Bit-Weiterleitungs-Ausgangsrouter, BFERs, zu identifizieren, und das erste Paket nicht verwendet wird, um Multicast-Daten zu übertragen; und
eine Sendeeinheit (602), die dazu konfiguriert ist, das erste Paket an den einen oder die mehreren BFERs basierend auf der in dem ersten Paket umfassten Bitfolge zu senden,
wobei das erste Paket einen Header für bitindizierte explizite Replikation, BIER, und ein einfaches Zwei-Wege-Aktivmessprotokoll-Testpaket, STAMP-Testpaket, umfasst, der BIER-Header zum Tragen der Bitfolge verwendet wird und das STAMP-Testpaket zum Tragen des ersten Parameters verwendet wird.

8. Vorrichtung (600) nach Anspruch 7, wobei die Vorrichtung ferner Folgendes umfasst:
eine Empfangseinheit (603), die dazu konfiguriert ist, ein zweites Paket, das durch einen ersten BFER in dem oder den mehreren BFERs gesendet wird, zu empfangen, wobei das zweite Paket eine Kennung des ersten BFER, einen zweiten Parameter und den ersten Parameter umfasst und der zweite Parameter und der erste Parameter Leistungsparameter desselben Typs sind; und
eine zweite Erfassungseinheit (604), die dazu konfiguriert ist, basierend auf dem zweiten Parameter und dem ersten Parameter einen Leistungsparameter, der einem Pfad zwischen dem ersten BFER und dem BFIR entspricht, zu erlangen.

9. Vorrichtung (600) nach Anspruch 7 oder 8, wobei das erste Paket einen Basis-Header des Internetprotokolls Version 6, IPv6, umfasst, ein nächstes Header-Feld des IPv6-Basis-Headers angibt, dass ein Zieloptionen-Header, DOH, gekapselt ist, der DOH zum Tragen des BIER-Headers verwendet wird und Nutzdaten des ersten Pakets zum Tragen des STAMP-Testpakets verwendet werden.

10. Vorrichtung (600) nach einem der Ansprüche 7 oder 8, wobei das erste Paket einen IPv6-Basis-Header umfasst, ein nächstes Header-Feld des IPv6-Basis-Headers angibt, dass ein DOH gekapselt ist, und der DOH zum Tragen des BIER-Headers und des als Nutzdaten verwendeten STAMP-Testpakets verwendet wird.

11. Vorrichtung (600) nach Anspruch 7 oder 8, wobei das erste Paket ferner eine Knotentabelle, die zum Tragen von Knoteninformationen eines Zwischenbit-Weiterleitungs-Routers, BFR, verwendet wird, umfasst.

12. Vorrichtung (600) nach Anspruch 11, wobei das erste Paket einen BIER-Header, eine Betriebs-, Verwaltungs- und Wartungsoption innerhalb des Frequenzbandes, IOAM-Option, und ein STAMP-Testpaket umfasst, der BIER-Header zum Tragen der Bitfolge verwendet wird, die IOAM-Option zum Tragen der Knotentabelle verwendet wird und das STAMP-Testpaket zum Tragen des ersten Parameters verwendet wird.

13. Vorrichtung (600) nach Anspruch 12, wobei das erste Paket einen IPv6-Basis-Header umfasst, ein nächstes Header-Feld des IPv6-Basis-Headers angibt, dass ein DOH gekapselt ist, der DOH zum Tragen des BIER-Headers und der IOAM-Option verwendet wird und Nutzdaten zum Tragen des STAMP-Testpakets verwendet werden.

## Revendications

1. Procédé de mesure de performance, dans lequel le procédé comprend :
l'obtention (S201), par un routeur d'entrée à transfert de bits, BFIR, d'un premier paquet, dans lequel le premier paquet comprend un identifiant du BFIR, une chaîne de bits et un premier paramètre qui est utilisé pour la mesure des performance, la chaîne de bits est utilisée pour identifier un ou plusieurs routeurs de sortie à transfert de bits, BFER, et le premier paquet n'est pas utilisé pour transmettre des données de multidiffusion ; et
l'envoi (S202), par le BFIR, du premier paquet aux un ou plusieurs BFER en fonction de la chaîne de bits comprise dans le premier paquet,
dans lequel le premier paquet comprend un en-tête de réplication explicite d'index de bits, BIER, et un paquet de test de protocole de mesure active bidirectionnelle simple, STAMP, l'en-tête BIER est utilisé pour transporter la chaîne de bits et le paquet de test STAMP est utilisé pour transporter le premier paramètre.

2. Procédé selon la revendication 1, dans lequel le procédé comprend également :
réception (S204), par le BFIR, d'un second paquet envoyé par un premier BFER dans les un ou plusieurs BFER, dans lequel le second paquet comprend un identifiant du premier BFER, un second paramètre et le premier paramètre, et le second paramètre et le premier paramètre sont des paramètres de performance de même type ; et
l'obtention (S207), par le BFIR basé sur le second paramètre et le premier paramètre, d'un paramètre de performance correspondant à un trajet entre le premier BFER et le BFIR.

3. Procédé selon l'une quelconque des revendications 1 ou 2, dans lequel le premier paquet comprend un en-tête de base du protocole Internet version 6, IPv6, un champ d'en-tête suivant de l'en-tête de base IPv6 indique qu'un en-tête d'options de destination, DOH, est encapsulé, le DOH est utilisé pour transporter l'en-tête BIER, et une charge utile du premier paquet est utilisée pour transporter le paquet de test STAMP.

4. Procédé selon l'une quelconque des revendications 1 ou 2, dans lequel le premier paquet comprend un en-tête de base IPv6, un champ d'en-tête suivant de l'en-tête de base IPv6 indique qu'un DOH est encapsulé, et le DOH est utilisé pour transporter l'en-tête BIER et le paquet de test STAMP qui est utilisé comme une charge utile.

5. Procédé selon la revendication 1 ou 2, dans lequel le premier paquet comprend également une table de nœuds utilisée pour transporter les informations de nœud d'un routeur de transfert de bits intermédiaire, BFR.

6. Procédé selon la revendication 5, dans lequel le premier paquet comprend un en-tête BIER, une option opérations, administration et maintenance en bande, IOAM, et un paquet de test STAMP, l'en-tête BIER est utilisé pour transporter la chaîne de bits, l'option IOAM est utilisée pour transporter la table de nœuds et le paquet de test STAMP est utilisé pour transporter le premier paramètre.

7. Appareil de mesure de performance (600), dans lequel l'appareil est disposé dans un routeur d'entrée à transfert de bits, BFIR, et comprend :
une première unité d'obtention (601), configurée pour obtenir un premier paquet, dans lequel le premier paquet comprend un identifiant du BFIR, une chaîne de bits et un premier paramètre qui est utilisé pour la mesure des performance, la chaîne de bits est utilisée pour identifier un ou plusieurs routeurs de sortie à transfert de bits, BFER, et le premier paquet n'est pas utilisé pour transmettre des données de multidiffusion ; et
une unité d'envoi (602), configurée pour envoyer le premier paquet aux un ou plusieurs BFER en fonction de la chaîne binaire comprise dans le premier paquet,
dans lequel le premier paquet comprend un en-tête de réplication explicite d'index de bits, BIER, et un paquet de test de protocole de mesure active bidirectionnelle simple, STAMP, l'en-tête BIER est utilisé pour transporter la chaîne de bits et le paquet de test STAMP est utilisé pour transporter le premier paramètre.

8. Appareil (600) selon la revendication 7, dans lequel l'appareil comprend également :
une unité de réception (603), configurée pour recevoir un second paquet envoyé par un premier BFER dans les un ou plusieurs BFER, dans lequel le second paquet comprend un identifiant du premier BFER, un second paramètre et le premier paramètre, et le second paramètre et le premier paramètre sont des paramètres de performance de même type ; et
une seconde unité d'obtention (604), configurée pour obtenir, sur la base du second paramètre et du premier paramètre, un paramètre de performance correspondant à un trajet entre le premier BFER et le BFIR.

9. Appareil (600) selon la revendication 7 ou 8, dans lequel le premier paquet comprend un en-tête de base du protocole Internet version 6, IPv6, un champ d'en-tête suivant de l'en-tête de base IPv6 indique qu'un en-tête d'options de destination, DOH, est encapsulé, le DOH est utilisé pour transporter l'en-tête BIER, et une charge utile du premier paquet est utilisée pour transporter le paquet de test STAMP.

10. Appareil (600) selon l'une quelconque des revendications 7 ou 8, dans lequel le premier paquet comprend un en-tête de base IPv6, un champ d'en-tête suivant de l'en-tête de base IPv6 indique qu'un DOH est encapsulé, et le DOH est utilisé pour transporter l'en-tête BIER et le paquet de test STAMP qui est utilisé comme une charge utile.

11. Appareil (600) selon la revendication 7 ou 8, dans lequel le premier paquet comprend également une table de nœuds utilisée pour transporter les informations de nœud d'un routeur de transfert de bits intermédiaire, BFR.

12. Appareil (600) selon la revendication 11, dans lequel le premier paquet comprend un en-tête BIER, une option opérations, administration et maintenance en bande, IOAM, et un paquet de test STAMP, l'en-tête BIER est utilisé pour transporter la chaîne de bits, l'option IOAM est utilisée pour transporter la table de nœuds et le paquet de test STAMP est utilisé pour transporter le premier paramètre.

13. Appareil (600) selon la revendication 12, dans lequel le premier paquet comprend un en-tête de base IPv6, un champ d'en-tête suivant de l'en-tête de base IPv6 indique qu'un DOH est encapsulé, le DOH est utilisé pour transporter l'en-tête BIER et l'option IOAM, et une charge utile du premier paquet est utilisée pour transporter le paquet de test STAMP.
